(19) Europäisches Patentamt / European Patent Office / Office européen des brevets

(11) **EP 1 592 871 B1**

(12) **EUROPÄISCHE PATENTSCHRIFT**

(45) Veröffentlichungstag und Bekanntmachung des Hinweises auf die Patenterteilung:
**28.04.2010 Patentblatt 2010/17**

(21) Anmeldenummer: **03815833.3**

(22) Anmeldetag: **24.12.2003**

(51) Int Cl.:
***F02D 41/02*** *(2006.01)* ***F02D 41/40*** *(2006.01)*

(86) Internationale Anmeldenummer:
**PCT/EP2003/014895**

(87) Internationale Veröffentlichungsnummer:
**WO 2004/072461 (26.08.2004 Gazette 2004/35)**

(54) **VERFAHREN ZUM BETRIEB EINER BRENNKRAFTMASCHINE MIT KRAFTSTOFFDIREKTEINSPRITZUNG**

METHOD FOR OPERATING AN INTERNAL COMBUSTION ENGINE WITH DIRECT FUEL INJECTION

PROCEDE POUR FAIRE FONCTIONNER UN MOTEUR A COMBUSTION INTERNE AVEC INJECTION DIRECTE DE CARBURANT

(84) Benannte Vertragsstaaten:
**DE FR GB IT**

(30) Priorität: **12.02.2003 DE 10305941**

(43) Veröffentlichungstag der Anmeldung:
**09.11.2005 Patentblatt 2005/45**

(73) Patentinhaber: **Daimler AG**
**70327 Stuttgart (DE)**

(72) Erfinder:
- **KÖHLER, Bernd**
  **73072 Donzdorf (DE)**
- **OECHSLE, Michael**
  **71065 Sindelfingen (DE)**
- **PLATZEK, Oliver**
  **73275 Ohmden (DE)**

(74) Vertreter: **JENSEN & SON**
**366-368 Old Street**
**London EC1V 9LT (GB)**

(56) Entgegenhaltungen:
**EP-A- 0 856 655**
**EP-A- 1 004 762**
**EP-A- 1 030 046**
**US-B1- 6 345 499**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 592 871 B1

## Beschreibung

Die Erfindung betrifft ein Verfahren zum Betrieb einer fremdgezündeten Brennkraftmaschine mit einem Brennraum, einem im Brennraum angeordneten Kraftstoffinjektor und einer Zündquelle zur Zündung eines im Brennraum gebildeten Kraftstoff/Luftgemisches, wobei ein Teil der in den Brennraum eingebrachten Kraftstoffmenge als eine Voreinspritzung in einem Ansaughub der Brennkraftmaschine eingespritzt wird.

Ein Beispiel ist in US 6,345,499 beschrieben.

Während einer Startphase einer fremdgezündeten Brennkraftmaschine mit einer direkten Kraftstoffeinspritzung wird die Brennkraftmaschine nach einem Kaltstart mit einem fetten Ladungsgemisch zur Gewährleistung einer ausreichenden Entflammungssicherheit eines im Brennraum gebildeten Gemisches und zur Aufheizung einer für die Abgasnachbehandlung vorgesehenen Katalysatoreinrichtung betrieben. Damit kann ebenfalls eine verbesserte Laufruhe der Brennkraftmaschine gewährleistet werden.

Mit den bisher bekannten Verfahren zur Aufheizung eines Abgaskatalysators für einen direkteinspritzenden Ottomotor wird beim Kaltstartbetrieb bis zum Erreichen einer Light-Off-Temperatur des Abgaskatalysators eine zu lange Aufheizphase des Abgaskatalysators benötigt. Eine Light-Off-Temperatur ist diejenige Temperatur bzw. derjenige Temperaturbereich, bei der oder in dem eine bedeutsame Umsatzrate des Katalysators, z.B. zwischen 20% und 50%, erfolgt, d.h. dort, wo eine nennenswerte Konversion von Kohlenwasserstoffen, Kohlenmonoxid und Stickoxiden beginnt.

Aufgabe der Erfindung ist es, ein Verfahren zum Betrieb der Brennkraftmaschine derart zu gestalten, dass während einer Kaltstartphase ein schnelles Aufheizen eines Abgaskatalysators der Brennkraftmaschine erzielt wird.

Die Aufgabe wird erfindungsgemäß durch ein Verfahren mit den Merkmalen des Anspruchs 1 gelöst.

Das erfindungsgemäße Verfahren zeichnet sich dadurch aus, dass einem Brennraum Verbrennungsluft zugeführt wird, Kraftstoff mittels eines im Brennraum angeordneten Kraftstoffinjektors in den Brennraum eingespritzt wird, mittels einer im Brennraum angeordneten Zündquelle ein gebildetes Kraftstoff/Luftgemisch bei einem vorbestimmten Zündzeitpunkt gezündet wird, wobei in einem Ansaughub der Brennkraftmaschine eine erste Kraftstoffmenge als eine Voreinspritzmenge eingespritzt wird, mit der im Brennraum ein homogenes Kraftstoff/Luftgemisch mit einer Luftzahl $\lambda$ größer als 1 gebildet wird, nachfolgend in einem Expansionshub der Brennkraftmaschine eine zweite Kraftstoffmenge als eine Haupteinspitzmenge in den Brennraum eingespritzt wird, mit der in der Nähe der Zündquelle eine geschichtete Kraftstoff/Luftgemisch-Wolke mit einer Luftzahl $\lambda$ kleiner als 1 gebildet wird, und nachfolgend, vorzugsweise nach dem Einspritzende der Haupteinspritzmenge, eine Zündung der geschichteten Kraftstoff/Luftgemisch-Wolke vorgenommen wird. Vorzugsweise wird das erfindungsgemäße Verfahren bei einer fremdgezündeten Brennkraftmaschine mit Direkteinspritzung verwendet, welche mit einem strahlgeführten Brennverfahren betrieben wird.

Die Luftzahl $\lambda$ wird durch das folgende Verhältnis definiert :

$$\lambda = \frac{\text{zugeführte Luftmenge}}{\text{theorischer Luftbedarf}}$$

Ist $\lambda$ = 1, so gilt das Verhältnis als stöchiometrisches Verbrennungsluftverhältnis; das ist der Fall,
wenn alle Brennstoff-Moleküle vollständig mit dem Luftsauerstoff reagieren, ohne dass Sauerstoff fehlt oder unverbrannter Sauerstoff übrig bleibt.
Für Verbrennungsmotoren gilt:

> $\lambda$ < 1 (z. B. 0,9) bedeutet "Luftmangel": *fettes* oder auch *reiches* Gemisch
> $\lambda$ > 1 (z. B. 1,1) bedeutet "Luftüberschuss": *mageres* oder auch *armes* Gemisch.

Während einer Kaltstartphase wird die in den Brennraum eingespritzte Kraftstoffmenge auf zwei Einspritzmengen aufgeteilt. Die erste Einspritzung erfolgt im Ansaughub der Brennkraftmaschine. Ziel der ersten Einspritzung bzw. der Voreinspritzung im Ansaughub ist die Bildung eines mageren Kraftstoff/Luftgemisches im gesamten Brennraum, vorzugsweise mit einer Luftzahl $\lambda \approx$ 1,6. Mit der Haupteinspritzmenge, einer sogenannter Schichteinspritzung, wird eine geschichtete Ladungswolke im Bereich der Zündquelle bereitgestellt. Dabei wird eine Kraftstoff/Luftgemisch-Wolke mit einer Luftzahl $\lambda$ kleiner als 1 in Form einer geschichteten Ladungswolke im Bereich der Zündquelle derart bereitgestellt, dass eine sichere Entflammung dieser Ladungswolke auch bei einem späten Zündzeitpunkt gewährleistet ist. Vorzugsweise wird im gesamten Brennraum durch die gesamte Kraftstoffmenge, d.h. Vor- und Haupteinspritzmenge zusammen, eine globale Luftzahl $\lambda$ um 1,05 bereitgestellt. Dadurch wird eine vollständige Nachoxidation der gesamten Kraftstoffmenge beispielsweise im Auslasskanal oder Abgaskrümmer der Brennkraftmaschine ohne den Einsatz einer Sekundärlufteinblasung ermöglicht.

In einer Ausgestaltung des erfindungsgemäßen Verfahrens wird die Voreinspritzmenge in einem Bereich zwischen 330° KW und 220° KW vor einem oberen Zünd-Totpunkt ZOT in den Brennraum eingespritzt. Dadurch wird sichergestellt, dass sich die voreingespritzte Kraftstoffmenge rechtzeitig im Brennraum verteilt, so dass ein mageres Kraftstoff/Luftgemisch im gesamten Brennraum vor dem Einspritzzeitpunkt der Haupteinspritzmenge gebildet wird.

Gemäß einer weiteren Ausgestaltung der Erfindung wird die Haupteinspritzmenge in einem Bereich zwischen 10°KW und 30°KW nach ZOT in den Brennraum eingespritzt. Durch eine derartige Haupteinspritzung kann eine sichere Entflammung der geschichteten Gemischwolke bei einem späten Zündzeitpunkt vorgenommen werden. Demgemäss wird eine hohe Abgastemperatur erzeugt sowie ein relativ spätes Verbrennungsende erreicht, da durch die erfindungsgemäße Haupteinspritzung und den späten Zündzeitpunkt eine späte Schwerpunktlage der Verbrennung erzielt wird. Schwerpunktlage der Verbrennung ist eine Kolbenstellung, bei der 50% der Kraftstoffmenge umgesetzt bzw. bereits verbrannt sind. Die dadurch erzielten hohen Abgastemperaturen und ein leichter Sauerstoffüberschuss begünstigen die Nachoxidation von CO und HC sowohl im Abgassystem als auch im Katalysator. Dieser ist vorzugsweise als ein Stirnwandkatalysator ausgebildet. Die hohe Abgastemperatur sowie die Nachoxidation von CO und HC im Katalysator wirken derart zusammen, dass ein beschleunigtes Aufheizen des Katalysators erzielt werden kann. Hierdurch erreicht der Katalysator nach wenigen Sekunden seine Light-Off-Temperatur.

In einer weiteren Ausgestaltung der Erfindung findet die Zündung der geschichteten Kraftstoff/Luftgemisch-Wolke in einem Bereich zwischen 2°KW und 10°KW nach dem Ende der Haupteinspritzmenge statt. Da die Ladungsschichtung bei einem strahlgeführten Brennverfahren durch die Strahlform vorgegeben ist, werden bei allen Einspritzzeitpunkten der Haupteinspritzmenge eine stabile Ladungsschichtung sowie eine größere Freiheit bei der Wahl des Zündzeitpunktes ermöglicht.

Gemäß einer weiteren Ausgestaltung der Erfindung wird nach der Zündung der geschichteten Kraftstoff/Luftgemisch-Wolke eine dritte Kraftstoffmenge als eine Nacheinspritzmenge in den Brennraum eingespritzt. Durch die dritte Kraftstoffmenge, die während des Expansionshubes in die heißen Verbrennungsgase eingespritzt wird, wird dem Abgas weitere chemische Energie zugeführt. Dementsprechend werden die Abgastemperaturen mittels einer vollständigen Nachoxidation noch weiter erhöht.

In einer weiteren Ausgestaltung der Erfindung wird eine Steuerung einer Aufheizphase eines für die Abgasnachbehandlung vorgesehenen Katalysators durch eine betriebspunktabhängige Vorgabe eines Kraftstoffmengenverhältnisses zwischen der Voreinspritzmenge und der Haupteinspritzmenge vorgenommen, so dass ein Ende der Katalysatoraufheizphase aus der bei der Oxidation der vom Betriebspunkt abhängigen Voreinspritzmenge freiwerdenden Reaktionswärme ermittelt wird. Dadurch wird eine unnötige Verlängerung der Katalysatoraufheizphase vermieden.

Gemäß einer weiteren Ausgestaltung der Erfindung wird eine Momentenabgabe der Brennkraftmaschine durch die Haupteinspritzmenge und das Kraftstoffmengenverhältnis zwischen der Voreinspritzmenge und der Haupteinspritzmenge geregelt. Hierdurch soll die Laufruhe der Brennkraftmaschine während der Katalysatoraufheizphase optimiert werden.

Gemäß einer weiteren Ausgestaltung der Erfindung wird das Kraftstoffmengeverhältnis von der Voreinspritzmenge zu der Haupteinspritzmenge zwischen 0,4 und 0,6 gewählt. Somit wird eine ausreichende Laufruhe der Brennkraftmaschine trotz eines späten Zündzeitpunkts gewährleistet.

Weitere Merkmale und Merkmalskombinationen ergeben sich aus der Beschreibung. Konkrete Ausführungsbeispiele der Erfindung sind anhand der Zeichnungen vereinfacht dargestellt und in der nachfolgenden Beschreibung näher erläutert. Es zeigen:

Fig. 1 einen Zylinderquerschnitt einer direkteinspitzenden Brennkraftmaschine mit Fremdzündung,

Fig. 2 ein schematisches Diagramm des Temperaturverlaufes eines Oxidationskatalysators der Brennkraftmaschine gemäß Fig. 1 während eines Kaltstartbetriebes, aufgetragen über der Zeit,

Fig. 3 ein schematisches Diagramm des Emissionsverlaufs der Brennkraftmaschine, insbesondere der HC- und CO- Emissionen aufgetragen über der Zeit, und

Fig. 4 ein schematisches Diagramm des Einspritzverlaufs der Brennkraftmaschine gemäß Fig.1 während eines Kaltstarts, aufgetragen über dem Kurbelwinkel.

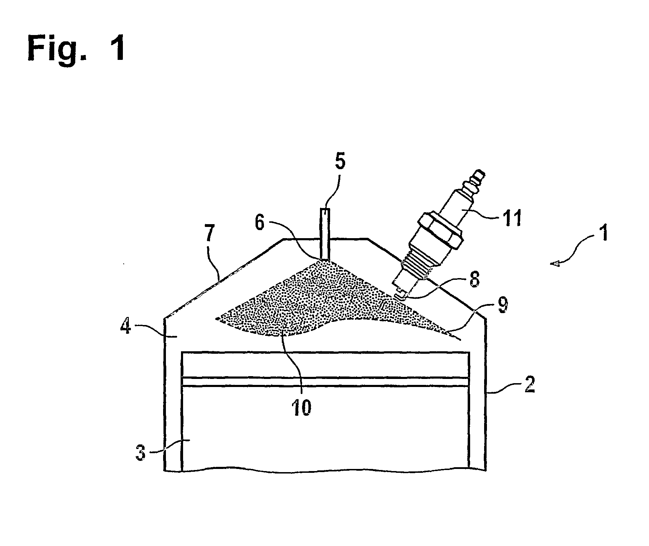

Fig. 1 zeigt einen Zylinder 2 einer fremdgezündeten Brennkraftmaschine 1 mit Direkteinspritzung, in dem ein längsbeweglich angeordneter Kolben 3 mit einem dem Zylinder 2 verschließenden Zylinderkopf 7 einen Brennraum 4 begrenzt. Im Zylinderkopf 7 ist ein Kraftstoffinjektor 5 zentral angeordnet, bei dem durch eine Düsenöffnung 6 Kraftstoff in den Brennraum 4 in Form eines Kraftstoffkegels 9 eingespritzt wird. Eine nicht dargestellte Steuereinrichtung bestimmt bei der Brennkraftmaschine 1 während einer Startphase die Einspritzzeitpunkte des Kraftstoffes sowie die dazugehörigen Kraftstoffmengen und einen Zündzeitpunkt, bei dem mittels einer Zündquelle 11 (Zündkerze o.ä.) ein im Brennraum 4 gebildetes Kraftstoff/Luftgemisch gezündet wird. Bei der Freigabe der Düsenöffnung 6 wird der Kraftstoff in Form eines Kegelstrahls 9 in den Brennraum 4 derart eingespritzt, dass die Elektroden 8 der im Zylinderkopf 7 angeordneten Zündkerze 11 im wesentlichen nicht benetzt werden.

Der Kraftstoffstrahl 9 wird mit einem Öffnungswinkel zwischen 70° und 110° in den Brennraum 4 eingespritzt. Die Positionierung der Zündkerze im Brennraum wird derart gewählt, dass die Elektroden 8 der Zündkerze 11 durch den eingespritzten Kraftstoff nicht benetzt werden.

Die in Fig. 1 dargestellte Brennkraftmaschine 1 arbeitet vorzugsweise nach dem Vier-Takt-Prinzip. In einem ersten Takt eines Arbeitsspiels der Brennkraftmaschine, sog. Ansaughub, wird dem Brennraum 4 durch einen nicht dargestellten Einlasskanal Verbrennungsluft zugeführt. Dabei bewegt sich der Kolben 3 in einer Abwärtsbewegung bis zu einem unteren Totpunkt UT. In einem weiteren Kompressionshub der Brennkraftmaschine bewegt sich der Kolben 3 in einer Aufwärtsbewegung vom unteren Totpunkt UT bis zu einem oberen Zünd-Totpunkt ZOT. In einem nachfolgenden Expansionshub bewegt sich der Kolben in einer Abwärtsbewegung bis zu einem unteren Totpunkt UT, wobei in einem vierten Ausschiebehub der Kolben 3 in einer Aufwärtsbewegung bis zu einem oberen Totpunkt OT fährt und dabei die Abgase aus dem Brennraum 4 ausschiebt.

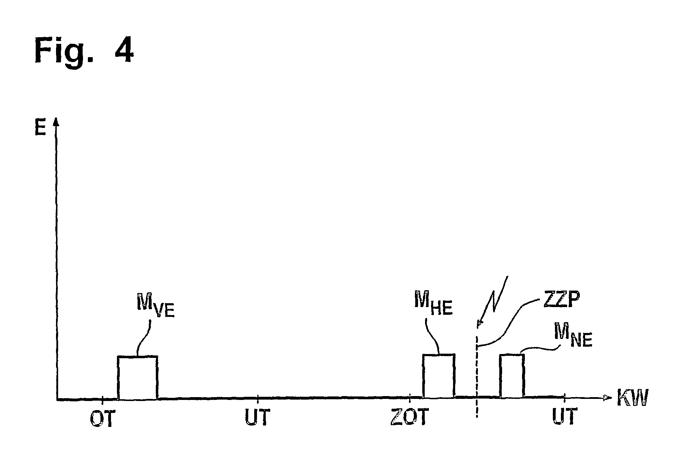

Ziel des erfindungsgemäßen Verfahrens ist es, einen Oxidationskatalysator der Brennkraftmaschine in möglichst kurzer Zeit nach einem Kaltstart derart aufzuheizen, dass eine Emissionsumsatzrate am Katalysator nach kurzer Zeit ihr Maximum erzielt. Dabei wird im Ansaughub der Brennkraftmaschine eine erste Kraftstoffmenge als eine Voreinspritzmenge $M_{VE}$ gemäß Fig. 4 eingespritzt. Hierdurch wird im Brennraum 4 ein homogenes Kraftstoff/Luftgemisch mit einer Luftzahl $\lambda$ größer als 1 gebildet. Ziel dieser Voreinspritzung ist die Bereitstellung eines mageren Kraftstoff/Luftgemisches vorzugsweise mit einer Luftzahl $\lambda \approx 1{,}6$.

In einem Expansionshub der Brennkraftmaschine wird eine zweite Kraftstoffmenge als eine Haupteinspritzmenge $M_{HE}$ in den Brennraum eingespritzt. Die zweite Einspritzung wird als Schichteinspritzung ausgeführt, d.h. sie wird in einen Brennraum mit einem hohen Gegendruck eingespritzt. Dadurch wird eine fette geschichtete Ladungswolke 10 mit $\lambda$ kleiner als 1 im Bereich der Zündkerze gebildet, welche sich zum Zündzeitpunkt an der Zündkerze 11 befindet. Somit wird eine sichere Entflammung der im Brennraum 4 befindlichen Ladung gewährleistet, insbesondere bei einem späteren Zündzeitpunkt, beispielsweise bei 30°KW nach ZOT.

Insbesondere eignet sich das erfindungsgemäße Verfahren für den Einsatz bei direkteinspritzenden Brennkraftmaschinen mit Fremdzündung, bei denen ein strahlgeführtes Brennverfahren vorliegt, da ein solches Brennverfahren einen sehr späten Zündzeitpunkt ermöglicht. Weiterhin kann während eines Kaltstarts die eingespritzte Kraftstoffmenge mindestens auf zwei Einspritzungen aufteilt werden.

Bei solchen Brennkraftmaschinen mit einem strahlgeführten Brennverfahren werden vorzugsweise nach außen öffnende Einspritzdüsen 6 verwendet. Demgemäss wird der Kraftstoff als ein Kraftstoffhohlkegel 9 mit einem Winkel zwischen 70° und 110° in den Brennraum 4 eingebracht, so dass der Kraftstoffhohlkegel 9 bei einer Kraftstoffeinspritzung kurz nach ZOT auf eine im Brennraum komprimierte Ladung trifft. Dabei bildet sich ein torusförmiger Wirbel im Außenbereich des Hohlkegels 9 bzw. am Rand des eingespritzten Kraftstoffhohlkegels 9, so dass im Bereich der Elektroden 8 der Zündkerze 11 ein zündfähiges Luftgemisch bereitgestellt wird. Dabei erfolgt die Anordnung der Zündkerze derart, dass die Elektroden 8 der Zündkerze 11 in den erzielten Randwirbel hineinragen, ohne dass sie während der Kraftstoffeinspritzung wesentlich benetzt werden.

Gemäß der vorliegenden Erfindung soll im Brennraum insgesamt ein leicht mageres Gemisch vorliegen, vorzugsweise mit einer globalen Luftzahl $\lambda \approx 1{,}05$. Durch das Zusammenwirken von Zündung, Verbrennung und Nachoxidation der HC- bzw. CO-Emissionen im Abgassystem wird insbesondre bei einem strahlgeführten Brennverfahren eine vollständige Oxidation der gesamten eingespritzten Kraftstoffmenge ohne Sekundärlufteinblasung ermöglicht.

Gemäß Fig. 1 liegt zum Zündzeitpunkt ZZP eine fette Ladungswolke 10 im Bereich der Elektroden 8 der Zündkerze 11 vorzugsweise mit einer Luftzahl $\lambda \approx 0{,}8$, wobei im übrigen Brennraum 4 außerhalb der fetten Ladungswolke 10 ein mageres Gemisch vorzugsweise mit einer Luftzahl $\lambda \approx 1{,}6$ vorliegt. Es wird eine sichere Zündung erzielt, so dass die Laufruhe der Brennkraftmaschine auch bei einem späten Zündzeitpunkt ZZP noch gegeben ist. Eine extreme Spätverschiebung des Zündzeitpunktes ZZP von bis zu 30°KW nach ZOT wird dadurch bei ausreichender Laufruhe ermöglicht. Dies wird durch das an den Zündzeitpunkt ZZP gekoppelte Einspritz-Timing der Schichteinspritzung erzielt, d.h., der Abstand zwischen dem Zündzeitpunkt ZZP und dem Einspritz-Timing der Schichteinspritzung bleibt konstant.

Dabei liegt das Einspritzende der Schichteinspritzung bei einem strahlgeführten Brennverfahren der direkteinspritzenden Brennkraftmaschine beispielsweise ca. 2°KW vor dem Zündzeitpunkt ZZP. Die Einspritzung erfolgt bei den extrem späten Zündzeitpunkten also im Arbeitshub bzw. im Expansionshub. Durch diese Kopplung von Zündung und Einspritzung sind die Gemischbildungsbedingungen in der fetten Ladungswolke 10 für alle Zündzeitpunkte nahezu gleich. Insbesondere bei einem Betriebspunkt mit einer Drehzahl von 1200 U/min und einem Luftsaugdruck von 800mbar findet die Zündung bei 30°KW nach ZOT statt, wobei im Brennraum 4 eine globale Luftzahl $\lambda = 1{,}05$ vorliegt. Vorzugsweise findet bei einem solchen Betriebspunkt die Voreinspritzung bei 260°KW vor ZOT und die Haupteinspritzung bei 25°KW nach ZOT statt.

Die Gemischbildung ist hier durch einen hohen Einspritzdruck vor allem von der Primäraufbereitung durch den Injektor 5 abhängig. Die Entflammungssicherheit hängt im wesentlichen von der Ladungsschichtung zum Zündzeitpunkt ZZP ab. Die Ladungsschichtung ist bei einem strahlgeführten Brennverfahren durch die Strahlform vorgegeben. Eine Einspritzung bei einer bestimmten Kolbenposition wie bei einem wandgeführten Brennverfahren ist hier nicht notwendig. Dies ermöglicht eine stabile Ladungsschichtung bei allen Einspritzzeitpunkten und somit eine größere Freiheit bei der Wahl des Zünd- bzw. Einspritzzeitpunktes. Diese Freiheit bei der Wahl des Zündzeitpunktes in Verbindung mit der gegebenen Entflammungssicherheit und Laufruhe bei extrem späten Zündzeitpunkten ermöglicht unterschiedliche Katalysator-Aufheizstrategien.

Das erfindungsgemäße Verfahren findet wie folgt statt. Durch die Einspritzung der Voreinspritzmenge $M_{VE}$ im Ansaughub wird im gesamten Brennraum 4 ein mageres Kraftstoff/Luftgemisch erzielt. Dies stellt ein ausreichendes Angebot an Kohlenwasserstoffmolekülen für die Nachoxidation zur Verfügung. Durch Einspritzung der Haupteinspritzmenge $M_{HE}$ wird im Bereich der Zündkerze 11 eine Ladungswolke 10 mit fettem Kraftstoff/Luftgemisch gebildet.

Es erfolgt eine schnelle Verbrennung des fetten Gemisches im Bereich der Zündkerze 11, wobei die Verbrennung der geschichteten Ladung 10 bis zum Öffnen eines Auslassventils weitgehende abgeschlossen ist. Das magere Gemisch, das den übrigen Brennraum 4 ausfüllt, nimmt nur zu einem kleinen Teil an der Verbrennung teil. Da sich die Brenngeschwindigkeit im Bereich des mageren Gemischs stark verlangsamt, ist der Beitrag zur Momentenbildung durch die mageren Brennraumbereiche vernachlässigbar klein. Die Kohlenwasserstoffe in den mageren Brennraumbereichen werden durch das sich öffnende Auslassventil ausgeschoben.

Durch die Verbrennung des fetten Gemisches entsteht eine große Menge an CO-Emissionen. Diese CO-Emissionen werden dann in der Ausschiebephase zusammen mit den Kohlenwasserstoffen aus den Magerbereichen nachoxidiert. Durch das global magere Frischgemisch im Brennraum steht für die Nachoxidation ein ausreichender Sauerstoffüberschuss zur Verfügung.

Des Weiteren wird durch den späten Zündzeitpunkt ZZP eine hohe Abgastemperatur erzielt, da der späte Zündzeitpunkt ZZP eine Verlagerung der Schwerpunktlage der Verbrennung in Richtung spät sowie ein spätes Brennende zur Folge hat. Die herrschenden Bedingungen in Form hoher Abgastemperaturen und Sauerstoffüberschuss begünstigen die Nachoxidation von CO und HC sowohl im Abgassystem, d.h. im Auslasskanal und Abgaskrümmer, als auch im Stirnwandkatalysator. Die dabei freiwerdende Reaktionswärme bewirkt einen weiteren Anstieg der Abgastemperatur. Die hohe Abgastemperatur sowie die Oxidation von CO und HC im Katalysator selbst sorgen für ein beschleunigtes Aufheizen des Stirnwandkatalysators, der somit nach wenigen Sekunden seine Light-Off-Temperatur erreicht hat.

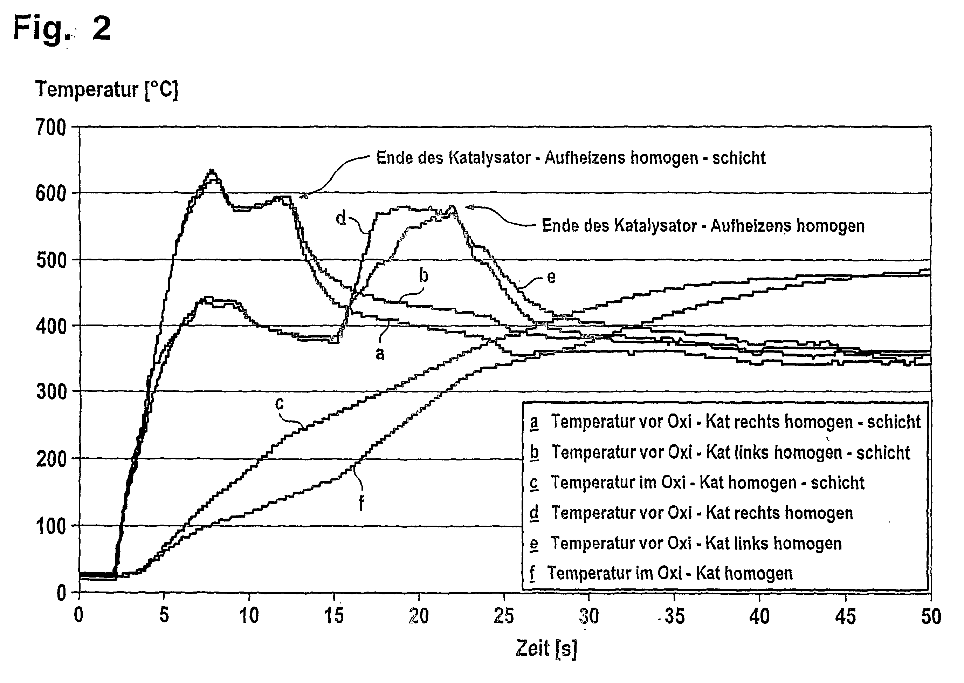

Fig. 2 zeigt gemessene Abgastemperaturen vor bzw. im Stirnwandkatalysator bei einer Kaltstartemissionsmessung. Der Ablauf der Messung entspricht den ersten Sekunden des EU98A-Zyklusses. Es wird deutlich, dass durch den späten Zündzeitpunkt in Verbindung mit der effektiven Nachoxidation des Kohlenmonoxids aus der fetten Gemischwolke, sowie der Kohlenwasserstoffe aus den Bereichen mit magerem Frischgemisch, sehr hohe Abgaswärmeströme zum Aufheizen des Stirnwandkatalysators zur Verfügung gestellt werden. Im Vergleich zur Messung mit einem homogenen Katalysator-Aufheizen mit spätem Zündzeitpunkt hat dies eine starke Verkürzung der Zeit bis zum Erreichen der Light-Off-Temperatur des Katalysators zur Folge.

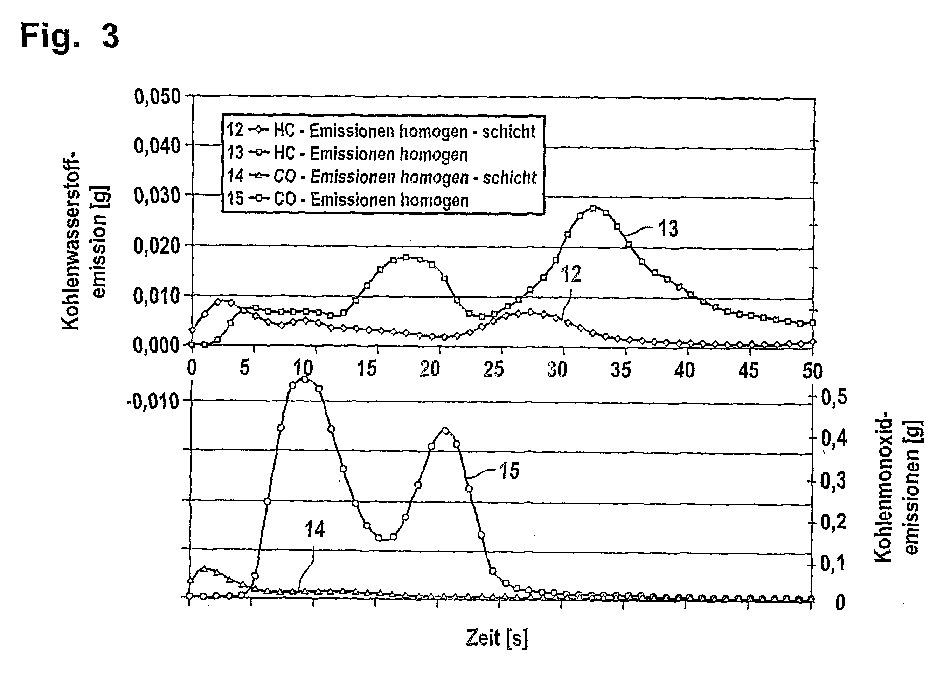

Fig. 3 zeigt die zur Messung nach Fig. 2 zugehörigen Schadstoffemissionen, gemessen mit einer für Abgas-Tests verwendeten CVS-Messanlage. Deutlich wird hier vor allem die geringe Kohlenwasserstoffemission direkt nach dem Kaltstart. Die Kohlenwasserstoffe aus den Magerbereichen des Brennraums 4 werden nahezu vollständig aufoxidiert. Auch die Kohlemonoxidemissionen aus den fetten Ladungsbereichen werden größtenteils aufoxidiert. Die hohen CO-Emissionen bei homogenem Katalysator-Aufheizen werden durch die im Kaltstart nötige Anfettung verursacht. Dies ist nötig, um bei homogenem Motorbetrieb eine befriedigende Laufruhe zu erzielen. Durch den betriebsbereiten Stirnwandkatalysator in der ersten Beschleunigungsphase nach elf Sekunden ist gerade hier eine starke E-missionsreduzierung zu beobachten.

Alternativ kann durch eine dritte Einspritzung einer Kraftstoff-Nacheinspritzmenge $M_{NE}$ gemäß Fig. 4, die im Arbeitstakt in das heiße Verbrennungsgas erfolgt, weitere chemische Energie zugeführt werden. Durch die im Auslasskanal herrschenden Umgebungsbedingungen wird die Nacheinspritzmenge $M_{NE}$ vollständig nachoxidiert. Voraussetzung hierfür ist allerdings ein ausreichender Sauerstoffüberschuss. Beim Vorliegen von drei Einspritzungen wird die Bildung eines global mageren Kraftstoff-Luft-Verhältnis erschwert, so dass der benötigte Sauerstoff dann vorzugsweise durch eine Sekundärlufteinblasung hinter einem Auslassventil zugeführt wird.

Vorzugsweise wird der Kraftstoff in Abhängigkeit von einer Drehzahl, einem Lastpunkt, einer Nockenwellenstellung, einem Saugrohrdruck direkt in den Brennraum eingespritzt. Das durch die Voreinspritzmenge $M_{VE}$ im Brennraum 4 gebildete Kraftstoff-Luft-Verhältnis ist betriebspunktabhängig, jedoch nicht zündfähig. Das durch die Voreinspritzmenge $M_{VE}$ gebildete Kraftstoff-Luft-Verhältnis bestimmt die bei der Nachoxidation freiwerdende Reaktionswärme.

Das vorliegende Verfahren sieht vor, dass die Momentenabgabe der Brennkraftmaschine von der Haupteinspritzmenge $M_{HE}$ abhängig ist. Dabei kann der Zündzeitpunkt ZZP betriebspunktabhängig an das Ende der Haupteinspritzung gekoppelt werden, d.h., der Zeitabstand zwischen dem Zündzeitpunkt ZZP und dem Ende der Haupteinspritzmenge $M_{HE}$ bleibt konstant. Hierdurch wird die Zündsicherheit und die Laufruhe der Brennkraftmaschine erhöht. Vorzugsweise wird die Einspritzung der Nacheinspritzmenge $M_{NE}$ nach der Zündung des Gemischs vorgenommen, wobei sie betriebspunktabhängig entweder mit einem konstanten Zeitabstand nach dem Zündzeitpunkt ZZP oder zu einem festen Einspritzzeitpunkt stattfindet, d.h., sie wird betriebspunktabhängig entweder an den Zündzeitpunkt ZZP oder an den Kurbelkreis gekoppelt.

Die Nacheinspritzmenge $M_{NE}$ dient der zusätzlichen Einbringung chemischer Energie in den Abgastrakt. Es ist denkbar, dass bei einer Nacheinspritzmenge $M_{NE}$ eine Sekundärlufteinblasung in den Abgaskrümmer vorgenommen wird. Hierdurch wird die Aufheizung des 3-Wege-Stirnwandkatalysators weiter beschleunigt.

Alternativ kann die Steuerung der Katalysatoraufheizung durch eine Vorgabe eines vorbestimmten Kraftstoffmengenverhältnisses $M_{VE}/M_{HE}$ zwischen der Voreinspritzmenge $M_{VE}$ und der Haupteinspritzmenge $M_{HE}$ erfolgen. Dieses Verhältnis $M_{VE}/M_{HE}$ wird vorzugsweise zwischen 0,4 und 0,6 gewählt. Hierdurch kann eine betriebspunktabhängige Berechnung des Endes der Katalysatoraufheizphase direkt aus der Voreinspritzmenge durchgeführt werden.

Vorzugsweise wird die Momentenabgabe der Brennkraftmaschine durch die Haupteinspritzung geregelt. Dies erfolgt in Abhängigkeit einer Momentenvorgabe, welche unter Berücksichtigung des vorbestimmten Kraftstoffmengenverhältnisses $M_{VE}/M_{HE}$ zwischen der Voreinspritzmenge $M_{VE}$ und der Haupteinspritzmenge $M_{HE}$ errechnet wird. Es ist denkbar, dass die Momentenabgabe der Brennkraftmaschine unmittelbar durch die Haupteinspritzmenge $M_{HE}$ korrigiert wird, um die an der Verbrennung teilnehmenden Voreinspritzmenge $M_{VE}$ zu bestimmen.

Die in Fig. 4 dargestellten Einspritzzeiten der Vor-, Haupt und Nacheinspritzmenge sind nur als Beispiel dargestellt, wobei die Einspritzzeiten betriebspunktabhängig wählbar sind und in Abhängigkeit von einer vorgegebenen Momentenabgabe variiert werden.

Das vorliegende Verfahren eignet sich insbesondere für eine optimale Aufheizung eines 3-Wege-Stirnwandkatalysators, insbesondere eines Ottomotors mit strahlgeführtem Brennverfahren, mit dem eine schnelle Aufheizung des Katalysators auf eine Arbeitstemperatur für die Konversion von Kohlenwasserstoffen, Kohlenmonoxid und Stickoxiden bei minimalen Schadstoffemissionen erzielt wird. Hierdurch wird eine Minimierung von Emissionen sowie ein niedriger Kraftstoffverbrauch nach dem Start des Motors ermöglicht. Eine während eines Kaltstarts eingespritzte Kraftstoffmenge wird auf zwei Einspritzungen aufteilt, wobei eine dritte Einspritzung während des Expansionshubs vorgenommen werden kann. Hierdurch soll ein mageres Kraftstoff-Luft-Gemisch im gesamten Brennraum erzielt werden. Die zweite Einspritzung wird als Schichteinspritzung unmittelbar vor dem Zündzeitpunkt ZZP vorgenommen, mit der eine fette geschichtete Ladungswolke im Bereich der Zündkerze bereitgestellt wird, so dass eine sichere Entflammung der geschichteten Ladungswolke ermöglicht wird.

## Patentansprüche

**1.** Verfahren zum Betrieb einer fremdgezündeten Brennkraftmaschine mit Direkteinspritzung, bei dem

- einem Brennraum Verbrennungsluft zugeführt wird,
- Kraftstoff mittels eines im Brennraum angeordneten Kraftstoffinjektors in den Brennraum eingespritzt wird,
- mittels einer im Brennraum angeordneten Zündquelle ein gebildetes Kraftstoff/Luft-Gemisch bei einem vorbestimmten Zündzeitpunkt gezündet wird, wobei
- in einem Ansaughub der Brennkraftmaschine eine erste Kraftstoffmenge als eine Voreinspritzmenge ($M_{VE}$) eingespritzt wird, mit der im Brennraum ein homogenes Kraftstoff/Luftgemisch mit einer Luftzahl ($\lambda$) größer als 1 gebildet wird,
- nachfolgend in einem Expansionshub der Brennkraftmaschine eine zweite Kraftstoffmenge als eine Haupteinspritzmenge ($M_{HE}$) in den Brennraum eingespritzt wird, mit der in der Nähe der Zündquelle eine geschichtete Kraftstoff/Luftgemisch-Wolke mit einer Luftzahl ($\lambda$) kleiner als 1 gebildet wird,
- und nachfolgend, nach dem Einspritzende der Haupteinspritzmenge ($M_{HE}$), eine Zündung der geschichteten Kraftstoff/Luftgemisch-Wolke vorgenommen wird.

**2.** Verfahren nach Anspruch 1 oder 2,
**dadurch gekennzeichnet,**
**dass** die Voreinspritzmenge ($M_{VE}$) in einem Bereich zwischen 330°KW und 220°KW vor einem oberen Zünd-Totpunkt (ZOT) in den Brennraum eingespritzt wird.

**3.** Verfahren nach einem der vorhergehenden Ansprüche,
**dadurch gekennzeichnet,**
**dass** die Haupteinspritzmenge ($M_{HE}$) in einem Bereich zwischen 10°KW und 30°KW nach ZOT in den Brennraum eingespritzt wird.

**4.** Verfahren nach einem der vorhergehenden Ansprüche,
**dadurch gekennzeichnet,**
**dass** die Zündung der geschichteten Kraftstoff/Luftgemischwolke in einem Bereich zwischen 2°KW und 10°KW nach dem Ende der Haupteinspritzmenge ($M_{HE}$) stattfindet.

**5.** Verfahren nach einem der vorhergehenden Ansprüche,
**dadurch gekennzeichnet,**
**dass** nach der Zündung der geschichteten Kraftstoff/Luftgemischwolke eine dritte Kraftstoffmenge als Nacheinspritzmenge ($M_{NE}$) in den Brennraum eingespritzt wird.

6. Verfahren nach einem der vorhergehenden Ansprüche,
**dadurch gekennzeichnet,**
**dass** eine Steuerung einer Aufheizphase eines für die Abgasnachbehandlung vorgesehenen Katalysators durch eine betriebspunktabhängige Vorgabe eines Kraftstoffmengenverhältnisses ($M_{VE}/M_{HE}$) zwischen der Voreinspritzmenge ($M_{VE}$) und der Haupteinspritzmenge ($M_{HE}$) vorgenommen wird, so dass ein Ende der Katalysatoraufheizphase aus einer bei der Oxidation der vom Betriebspunkt abhängigen Voreinspritzmenge ($M_{VE}$) freiwerdenden Reaktionswärme ermittelt wird.

7. Verfahren nach einem der vorhergehenden Ansprüche,
**dadurch gekennzeichnet,**
**dass** eine Momentenabgabe der Brennkraftmaschine durch die Haupteinspritzmenge ($M_{HE}$) und das Kraftstoffmengenverhältnis ($M_{VE}/M_{HE}$) geregelt wird.

8. Verfahren nach einem der vorhergehenden Ansprüche,
**dadurch gekennzeichnet,**
**dass** das Kraftstoffmengenverhältnis ($M_{VE}/M_{HE}$) von Voreinspritzmenge ($M_{VE}$) zu Haupteinspritzmenge ($M_{HE}$) zwischen 0,4 und 0,6 gewählt wird.

## Claims

1. Method for operating an internal combustion engine with spark ignition and direct injection, wherein

- combustion air is fed into a combustion chamber,
- fuel is injected into the combustion chamber by means of a fuel injector located in the combustion chamber,
- an air/fuel mixture is ignited at a preset ignition point by means of an ignition source located in the combustion chamber, wherein
- in an intake stroke of the internal combustion engine, a first fuel amount is injected as a pilot injection amount ($M_{VE}$), whereby a homogeneous air/fuel mixture with an air ratio ($\lambda$) greater than 1 is formed in the combustion chamber,
- whereupon, in an expansion stroke of the internal combustion engine, a second fuel amount is injected into the combustion chamber as a main injection amount ($M_{HE}$), whereby a layered air/fuel mixture cloud with an air ratio ($\lambda$) of less than 1 is formed in the vicinity of the ignition source,
- whereupon, following the end of the injection of the main injection amount ($M_{HE}$), the layered air/fuel mixture cloud is ignited.

2. Method according to claim 1 or 2,
**characterised in that**
the pilot injection amount ($M_{VE}$) is injected into the combustion chamber in a range between 330°KW and 220°KW before a top ignition dead centre (ZOT).

3. Method according to any of the preceding claims,
**characterised in that**
the main injection amount ($M_{HE}$) is injected into the combustion chamber in a range between 10°KW and 30°KW after ZOT.

4. Method according to any of the preceding claims,
**characterised in that**
the layered air/fuel mixture cloud is ignited in a range between 2°KW and 10°KW after the end of the main injection amount ($M_{HE}$).

5. Method according to any of the preceding claims,
**characterised in that**
following the ignition of the layered air/fuel mixture cloud, a third fuel amount is injected into the combustion chamber as a post-injection amount ($M_{NE}$).

6. Method according to any of the preceding claims,
**characterised in that**
a heating phase of a catalytic converter provided for exhaust treatment is controlled by way of an operating point-dependent presetting of the fuel amount ratio ($M_{VE}/M_{HE}$) between the pilot injection amount ($M_{VE}$) and the main injection amount ($M_{HE}$), so that an end of the heating phase of the catalytic converter is determined from a heat of reaction released during the oxidation of the pilot injection amount ($M_{VE}$) dependent on the operating point.

7. Method according to any of the preceding claims,
**characterised in that**
a power output of the internal combustion engine is controlled by the main injection amount ($M_{HE}$) and the fuel amount ratio ($M_{VE}/M_{HE}$).

8. Method according to any of the preceding claims,
**characterised in that**
the fuel amount ratio ($M_{VE}/M_{HE}$) between the pilot injection amount ($M_{VE}$) and the main injection amount ($M_{HE}$) is chosen between 0.4 and 0.6.

## Revendications

1. Procédé pour faire fonctionner un moteur à combustion interne à allumage commandé et à injection directe, dans lequel

- de l'air de combustion est amené à une chambre de combustion,
- du carburant est injecté dans la chambre de combustion au moyen d'un injecteur de carburant situé dans la chambre de combustion,
- un mélange formé d'air/carburant est allumé à un moment d'allumage défini, au moyen d'une bougie d'allumage située dans la chambre de combustion,
- une préinjection ($M_{VE}$) d'une première quantité de carburant est effectuée lors d'une course d'admission du moteur à combustion interne, cette préinjection permettant d'obtenir dans la chambre de combustion un mélange d'air-carburant homogène dont le coefficient d'air ($\lambda$) est supérieur à 1,
- puis une injection principale ($M_{HE}$) d'une seconde quantité de carburant est effectuée dans la chambre de combustion lors d'une course d'expansion, cette injection principale permettant d'obtenir au voisinage de la bougie d'allumage un nuage de mélange d'air-carburant dont le coefficient d'air ($\lambda$) est inférieur à 1,
- et ensuite, après l'injection de la quantité principale de carburant ($M_{HE}$), un allumage du nuage de mélange d'air-carburant stratifié est effectué.

**2.** Procédé selon la revendication 1 ou 2, **caractérisé en ce que** la préinjection ($M_{VE}$) est effectuée dans une plage entre 330°KW et 220°KW avant le point mort haut d'allumage (ZOT) dans la chambre de combustion.

**3.** Procédé selon l'une quelconque des revendications précédentes, **caractérisé en ce que** l'injection principale de carburant ($M_{HE}$) est effectuée dans une plage entre 10°KW et 30°KW après le point mort haut d'allumage (ZOT) dans la chambre de combustion.

**4.** Procédé selon l'une quelconque des revendications précédentes, **caractérisé en ce que** l'allumage du nuage de mélange d'air-carburant a lieu dans une plage entre 2°KW et 10°KW après la fin de l'injection principale de carburant ($M_{HE}$).

**5.** Procédé selon l'une quelconque des revendications précédentes, **caractérisé en ce qu'**après l'allumage du nuage de mélange d'air-carburant stratifié, une post-injection ($M_{NE}$) d'une troisième quantité de carburant est effectuée dans la chambre de combustion.

**6.** Procédé selon l'une quelconque des revendications précédentes, **caractérisé en ce qu'**une phase de chauffage d'un catalyseur prévu pour le post-traitement des gaz d'échappement est commandée par la détermination d'un rapport de quantité de carburant ($M_{VE}/M_{HE}$) qui dépend du point de fonctionnement entre une préinjection ($M_{VE}$) et une injection principale ($M_{HE}$) de telle sorte qu'une fin de la phase de chauffage du catalyseur soit déterminée à partir d'une chaleur de réaction libérée lors de l'oxydation de la préinjection ($M_{VE}$) qui dépend du point de fonctionnement.

**7.** Procédé selon l'une quelconque des revendications précédentes, **caractérisé en ce qu'**une délivrance de couple du moteur à combustion interne est réglée par l'injection principale ($M_{HE}$) et par le rapport de quantité de carburant ($M_{VE}/M_{HE}$).

**8.** Procédé selon l'une quelconque des revendications précédentes, **caractérisé en ce que** le rapport de quantité de carburant ($M_{VE}/M_{HE}$) entre la préinjection ($M_{VE}$) et l'injection principale ($M_{HE}$) est choisi entre 0,4 et 0,6.

Fig. 1

5
6
7
11
1
8
9
4
2
10
3

Fig. 2
Temperatur [°C]
700
600
500
400
300
200
100
0
0
5
10
15
20
25
30
35
40
45
50
Zeit [s]
Ende des Katalysator - Aufheizens homogen - schicht
Ende des Katalysator - Aufheizens homogen
a
b
c
d
e
f
a Temperatur vor Oxi - Kat rechts homogen - schicht
b Temperatur vor Oxi - Kat links homogen - schicht
c Temperatur im Oxi - Kat homogen - schicht
d Temperatur vor Oxi - Kat rechts homogen
e Temperatur vor Oxi - Kat links homogen
f Temperatur im Oxi - Kat homogen

Fig. 3
Kohlenwasserstoff-emission [g]
0,050
0,040
0,030
0,020
0,010
0,000
-0,010
Kohlenmonoxid-emissionen [g]
0,5
0,4
0,3
0,2
0,1
0
0
5
10
15
20
25
30
35
40
45
50
Zeit [s]
12 HC - Emissionen homogen - schicht
13 HC - Emissionen homogen
14 CO - Emissionen homogen - schicht
15 CO - Emissionen homogen
12
13
14
15

Fig. 4

E
$M_{VE}$
$M_{HE}$
ZZP
$M_{NE}$
KW
OT
UT
ZOT
UT

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6345499 B